# EUROPEAN PATENT APPLICATION

(11) **EP 4 807 330 A1**
(43) Date of publication of application: **16.09.2026**
(21) Application number: 26164190.6
(22) Date of filing: 12.03.2026
(51) Int. Cl.: G01H 9/00, G01V 1/22

(54) **S-DAS BASED CCUS MONITORING SYSTEM USING AMBIENT NOISE INTERFEROMETRY**

(30) Priority: 12.03.2025 US 202563770439 P
(71) Applicant: Schlumberger Technology Corporation, Sugar Land, Texas 77478 (US)
(72) Inventor: BACHRACH, Ran, Houston, 77042 (US); RE, Simone, 20097 Milan (IT); GOFER, Edan, Houston, 77042 (US); BRANSTON, Michael William, 47800 Petaling Jaya (MY)
(74) Representative: Schlumberger Intellectual Property Department

(57) **Abstract**

A method for monitoring subsurface changes in a subsurface domain is disclosed. The method may include receiving ambient noise occurring in a subsurface domain, generating a plurality of time-space virtual shots by processing the ambient noise, modeling subsurface changes based on at least a portion of the plurality of time-space virtual shots, transforming the plurality of time-space virtual shots to a space-time representation, determining at least one difference between the transformed time-space virtual shots, and detecting the subsurface changes based on the at least one difference.

## Description

### Cross-Reference to Related Applications

The present application claims the benefit of U.S. Provisional Patent Application No. 63/770,439, filed on March 12, 2025, which is incorporated by reference herein in its entirety.

### Background

A reservoir can be a subsurface formation that can be characterized at least in part by its porosity and fluid permeability. As an example, a reservoir may be part of a basin such as a sedimentary basin. A basin can be a depression (for example, caused by plate tectonic activity, subsidence, and the like) in which sediments accumulate. As an example, where hydrocarbon source rocks occur in combination with appropriate depth and duration of burial, a petroleum system may develop within a basin, which may form a reservoir that includes hydrocarbon fluids (for example, oil, gas, and the like). Changes may occur in the subsurface, such as changes associated with a reservoir or with subsurface storage of a fluid such as CO2. It may be useful to monitor these subsurface changes, particularly in an efficient and cost-effective manner. What is needed is an improved system and method for monitoring subsurface changes (e.g., using ambient noise interferometry).

### Summary

The present disclosure includes a method for monitoring subsurface changes in a subsurface domain. The method may include receiving ambient noise occurring in a subsurface domain. The method may also include generating a plurality of time-space virtual shots by processing the ambient noise. The method may further include modeling subsurface changes based on at least a portion of the plurality of time-space virtual shots. The method may include transforming the plurality of time-space virtual shots to a space-time representation. The method may also include determining at least one difference between the transformed time-space virtual shots. Further, the method may include detecting the subsurface changes based on the at least one difference.

The present disclosure also includes a computing system. The computing system may include one or more processors. The computing system may also include a memory system. The memory system may include one or more non-transitory computer-readable media storing instructions that, when executed by at least one of the one or more processors, cause the computing system to perform operations. The operations may include receiving ambient noise. The operations may also include generating a plurality of time-space virtual shots by processing the ambient noise. The operations may further include modeling the subsurface based on at least a portion of the plurality time-space virtual shots. Additionally, the operations may include transforming the plurality of time-space virtual shots to a space-time representation. The operations may include determining at least one difference between the transformed time-space virtual shots. The operations may also include detecting changes in the subsurface based on the at least one difference.

The present disclosure also includes a non-transitory computer-readable medium storing instructions that, when executed by one or more processors of a computing system, cause the computing system to perform operations. The operations may include receiving ambient noise. The operations may also include generating a plurality of time-space virtual shots by processing the ambient noise. The operations may further include modeling the subsurface based on at least a portion of the plurality time-space virtual shots. The operations may additionally include transforming the plurality of time-space virtual shots to a space-time representation. The operations may include determining at least one difference between the transformed time-space virtual shots. The operations may also include detecting changes in the subsurface based on the at least one difference.

### Brief Description of the Drawings

The accompanying drawings, which are incorporated in and constitute a part of this specification, illustrate embodiments of the present teachings and together with the description, serve to explain the principles of the present teachings. In the figures:
**Figure 1A** illustrates an exemplary computing system, according to an embodiment.
**Figures 1B** illustrates a survey operation being performed by a survey tool to measure properties of a subterranean formation, according to an embodiment.
**Figure 1C** illustrates a drilling operation, according to an embodiment.
**Figure 1D** illustrates a wireline operation, according to an embodiment.
**Figure 1E** illustrates a production operation, according to an embodiment.
**Figure 1F** illustrates a schematic view, partially in cross section, of an oilfield, according to an embodiment.
**Figure 1G** illustrates an oilfield for performing production operations, according to an embodiment.
**Figures 2A-2D** illustrate construction of a virtual shot, according to an embodiment.
**Figures 3A-3C** illustrate synthetic modeling of subsurface changes, according to an embodiment.
**Figures 4A-4D** illustrate sensitivity modeling of the theoretical response showing where to expect differences, according to an embodiment.
**Figures 5A-5D** illustrate numerical dispersion derived from synthetic data, according to an embodiment.
**Figures 6A-6C** illustrate dispersion curves and their difference, according to an embodiment.
**Figure** 7 presents a flowchart to illustrate a method for monitoring subsurface changes using ambient noise interferometry, according to an embodiment.

### Detailed Description

Reference will now be made in detail to embodiments, examples of which are illustrated in the accompanying drawings and figures. In the following detailed description, numerous specific details are set forth in order to provide a thorough understanding of the invention. However, it will be apparent to one of ordinary skill in the art that the invention may be practiced without these specific details. In other instances, well-known methods, procedures, components, circuits and networks have not been described in detail so as not to unnecessarily obscure aspects of the embodiments.

It will also be understood that, although the terms first, second, etc., may be used herein to describe various elements, these elements should not be limited by these terms. These terms are used to distinguish one element from another. For example, a first object or step could be termed a second object or step, and, similarly, a second object or step could be termed a first object or step, without departing from the scope of the invention. The first object or step, and the second object or step, are both objects or steps, respectively, but they are not to be considered the same object or step.

The terminology used in the present disclosure may be for the purpose of describing particular embodiments and may not be intended to be limiting. As used in the present disclosure, including the appended claims, the singular forms "a," "an" and "the" are intended to include the plural forms as well, unless the context clearly indicates otherwise. It will also be understood that the term "and/or" as used herein may refer to and encompass any possible combination of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in response to detecting," depending on the context.

Those with skill in the art will appreciate that while some terms in this disclosure may refer to absolutes, *e.g., all* of the components of a wavefield, *all* source receiver traces, *each* of a plurality of objects, etc., the methods and techniques disclosed herein may also be performed on fewer than all of a given thing, e.g., performed on one or more components and/or performed on one or more source receiver traces. Accordingly, in instances in the disclosure where an absolute is used, the disclosure may also be interpreted to be referring to a subset.

### Computing Systems

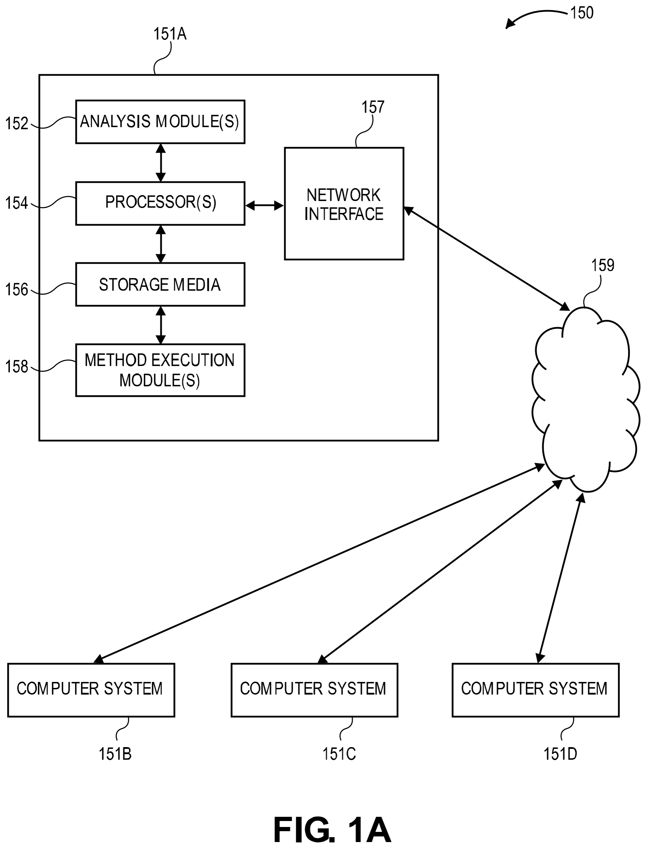

**Figure 1A** depicts an example computing system 150 in accordance with some embodiments. The computing system 150 may be an individual computer system 151A or an arrangement of distributed computer systems. The computer system 151A may include one or more analysis modules 152 that may be configured to perform various tasks according to some embodiments, such as one or more methods disclosed herein. In some embodiments, the analysis modules 152 (for example, geosciences analysis modules) may take the form of a sustainability analysis module. To perform these various tasks, analysis module 152 may execute independently, or in coordination with, one or more processors 154, which may be connected to one or more storage media 156. The processor(s) 154 may be also connected to a network interface 157 to allow the computer system 151A to communicate over a data network 159 with one or more additional computer systems and/or computing systems, such as 151B, 151C, and/or 151D (note that computer systems 151B, 151C and/or 151D may or may not share the same architecture as computer system 151A, and may be located in different physical locations, e.g., computer systems 151A and 151B may be on a ship underway on the ocean, while in communication with one or more computer systems such as 151C and/or 151D that may be located in one or more data centers on shore, other ships, and/or located in varying countries on different continents). Note that data network 159 may be a private network, it may use portions of public networks, it may include remote storage and/or applications processing capabilities (e.g., cloud computing).

A processor can include a microprocessor, microcontroller, processor module or subsystem, programmable integrated circuit, programmable gate array, or another control or computing device.

The storage media 156 may be implemented as one or more computer-readable or machine-readable storage media. Note that while in the example embodiment of **Figure 1A** storage media 156 is depicted as within computer system 151A, in some embodiments, storage media 156 may be distributed within and/or across multiple internal and/or external enclosures of computer system 151A and/or additional computing systems. Storage media 156 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs), BluRays or any other type of optical media; or other types of storage devices. Note that the instructions discussed above can be provided on one computer-readable or machine-readable storage medium, or alternatively, can be provided on multiple computer-readable or machine-readable storage media distributed in a large system having possibly plural nodes and/or non-transitory storage means. Such computer-readable or machine-readable storage medium or media may be considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In some embodiments, computing system 150 contains one or more method execution module(s) 158. In the example of computing system 150, computer system 151A includes the method execution module 158. In some embodiments, a single method execution module may be used to perform some aspects of one or more embodiments of the methods disclosed herein. In other embodiments, a plurality of method execution modules may be used to perform some aspects of methods herein.

It should be appreciated that computer system 151A is one example of a computing system, and that computer system 151A may have more or fewer components than shown, may combine additional components not depicted in the example embodiment of Figure **1A****,** and/or computer system 151A may have a different configuration or arrangement of the components depicted in **Figure 1A****.** The various components shown in **Figure 1A** may be implemented in hardware, software, or a combination of both, hardware and software, including one or more signal processing and/or application specific integrated circuits.

It should also be appreciated that while no user input/output peripherals may be illustrated with respect to computer systems 151A, 151B, 151C, and 151D, many embodiments of computing system 150 may include computer systems with keyboards, mice, touch screens, displays, etc. Some computer systems in use in computing system 150 may be desktop workstations, laptops, tablet computers, smartphones, server computers, and the like.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware may be included within the scope of protection.

Computational interpretations, models, and/or other interpretation aids may be refined in an iterative fashion; this concept may be applicable to the methods discussed herein. This may include use of feedback loops executed on an algorithmic basis, such as at a computing device (e.g., computing system 150, **Figure 1A****),** and/or through manual control by a user who may make determinations regarding whether a given step, action, template, model, or set of curves has become sufficiently accurate for the evaluation of the subsurface three-dimensional geologic formation under consideration.

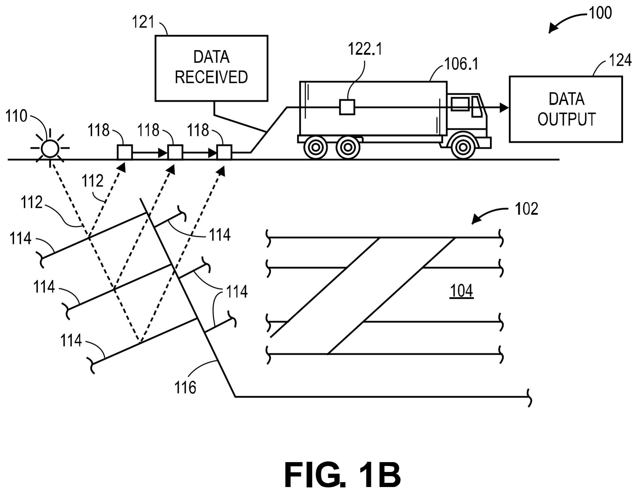

**Figures 1B-1E** illustrate simplified, schematic views of oilfield 100 having subterranean formation 102 containing reservoir 104 therein in accordance with implementations of various technologies and techniques described herein.

**Figure 1B** illustrates a survey operation being performed by a survey tool, such as seismic truck 106.1, to measure properties of the subterranean formation. The survey operation may be a seismic survey operation for producing sound vibrations. In **Figure 1B****,** one such sound vibration, e.g., sound vibration 112 generated by source 110, reflects off horizons 114 in earth formation 116. A set of sound vibrations may be received by sensors, such as geophone-receivers 118, situated on the earth's surface. The data received 120 may be provided as input data to a computer 122.1 of a seismic truck 106.1, and responsive to the input data, computer 122.1 generates seismic data output 124. This seismic data output may be stored, transmitted or further processed as desired, for example, by data reduction.

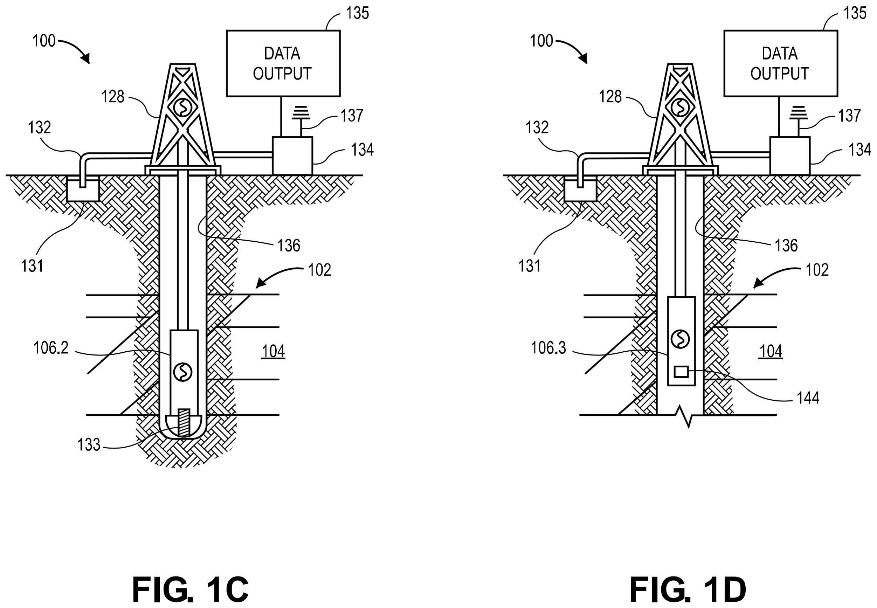

**Figure 1C** illustrates a drilling operation being performed by drilling tools 106.2 suspended by rig 128 and advanced into subterranean formations 102 to form wellbore 136. Mud pit 130 may be used to draw drilling mud into the drilling tools via flow line 132 for circulating drilling mud down through the drilling tools, then up wellbore 136 and back to the surface. The drilling mud may be filtered and returned to the mud pit. A circulating system may be used for storing, controlling, or filtering the flowing drilling mud. The drilling tools may be advanced into subterranean formations 102 to reach reservoir 104. Each well may target one or more reservoirs. The drilling tools may be adapted for measuring downhole properties using logging while drilling tools. The logging while drilling tools may also be adapted for taking core sample 133 as shown.

Wireline tool 106.3 may be operatively connected to, for example, geophones 118 and a computer 122.1 of a seismic truck 106.1 of **Figure 1B****.** Wireline tool 106.3 may also provide data to surface unit 134. Surface unit 134 may collect data generated during the wireline operation and may produce data output 135 that may be stored or transmitted. Wireline tool 106.3 may be positioned at various depths in the wellbore 136 to provide a survey or other information relating to the subterranean formation 102.

**Figure 1D** illustrates a well logging environment where a well is being logged using a wireline tool 106.3. Sensors (S), such as gauges, may be positioned about oilfield 100 to collect data relating to various field operations as described previously. As shown, sensor S may be positioned in wireline tool 106.3 to measure downhole parameters which relate to, for example porosity, permeability, fluid composition and/or other parameters of the field operation.

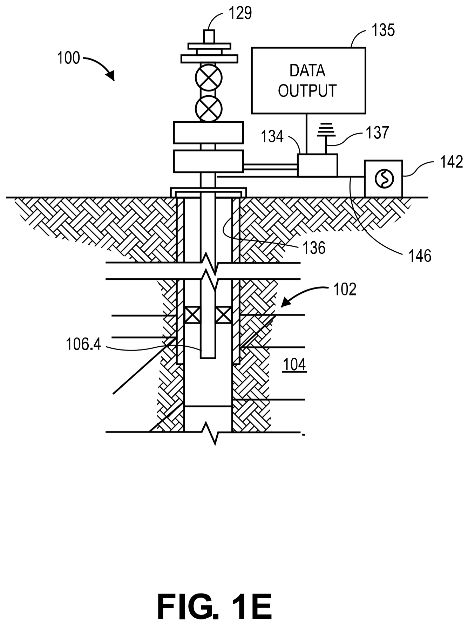

**Figure 1E** illustrates a production operation being performed by production tool 106.4 deployed from a production unit or Christmas tree 129 and into completed wellbore 136 for drawing fluid from the downhole reservoirs into surface facilities 142. The fluid flows from reservoir 104 through perforations in the casing (not shown) and into production tool 106.4 in wellbore 136 and to surface facilities 142 via gathering network 146.

Data plots 208.1-208.3 are examples of static data plots that may be generated by data acquisition tools 202.1-202.3, respectively; however, it should be understood that data plots 208.1-208.3 may also be data plots that are updated in real time. These measurements may be analyzed to better define the properties of the formation(s) and/or determine the accuracy of the measurements and/or for checking for errors. The plots of each of the respective measurements may be aligned and scaled for comparison and verification of the properties.

Static data plot 208.1 may be a seismic two-way response over a period of time. Static plot 208.2 may be core sample data measured from a core sample of the formation 204. The core sample may be used to provide data, such as a graph of the density, porosity, permeability, or some other physical property of the core sample over the length of the core. Tests for density and viscosity may be performed on the fluids in the core at varying pressures and temperatures. Static data plot 208.3 may be a logging trace that may provide a resistivity or other measurement of the formation at various depths.

A production decline curve or graph 208.4 may be a dynamic data plot of the fluid flow rate over time. The production decline curve may provide the production rate as a function of time. As the fluid flows through the wellbore, measurements may be taken of fluid properties, such as flow rates, pressures, composition, etc.

Other data may also be collected, such as historical data, user inputs, economic information, and/or other measurement data and other parameters of interest. As described below, the static and dynamic measurements may be analyzed and used to generate models of the subterranean formation to determine characteristics thereof. Similar measurements may also be used to measure changes in formation aspects over time.

The subterranean structure 204 has a plurality of geological formations 206.1-206.4. As shown, this structure has several formations or layers, including a shale layer 206.1, a carbonate layer 206.2, a shale layer 206.3 and a sand layer 206.4. A fault 207 extends through the shale layer 206.1 and the carbonate layer 206.2. The static data acquisition tools may be adapted to take measurements and detect characteristics of the formations.

While a specific subterranean formation with specific geological structures is depicted, it will be appreciated that oilfield 200 may contain a variety of geological structures and/or formations, sometimes having extreme complexity. In some locations, for example, below the water line, fluid may occupy pore spaces of the formations. Each of the measurement devices may be used to measure properties of the formations and/or its geological features. While each acquisition tool is shown as being in specific locations in oilfield 200, it will be appreciated that one or more types of measurement may be taken at one or more locations across one or more fields or other locations for comparison and/or analysis.

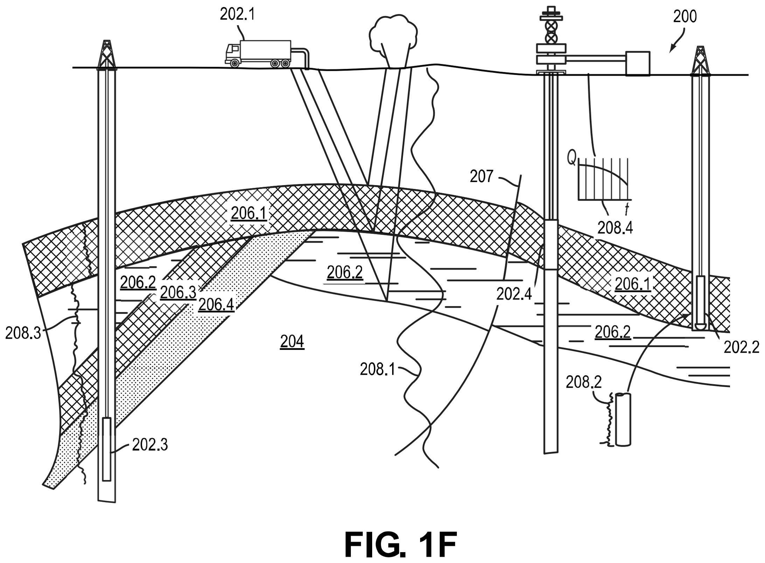

The data collected from various sources, such as the data acquisition tools of **Figure 1F****,** may then be processed and/or evaluated. Typically, seismic data displayed in static data plot 208.1 from data acquisition tool 202.1 may be used by a geophysicist to determine characteristics of the subterranean formations and features. The core data shown in static plot 208.2 and/or log data from well log 208.3 may be used by a geologist to determine various characteristics of the subterranean formation. The production data from graph 208.4 may be used by the reservoir engineer to determine fluid flow reservoir characteristics. The data analyzed by the geologist, geophysicist and the reservoir engineer may be analyzed using modeling techniques.

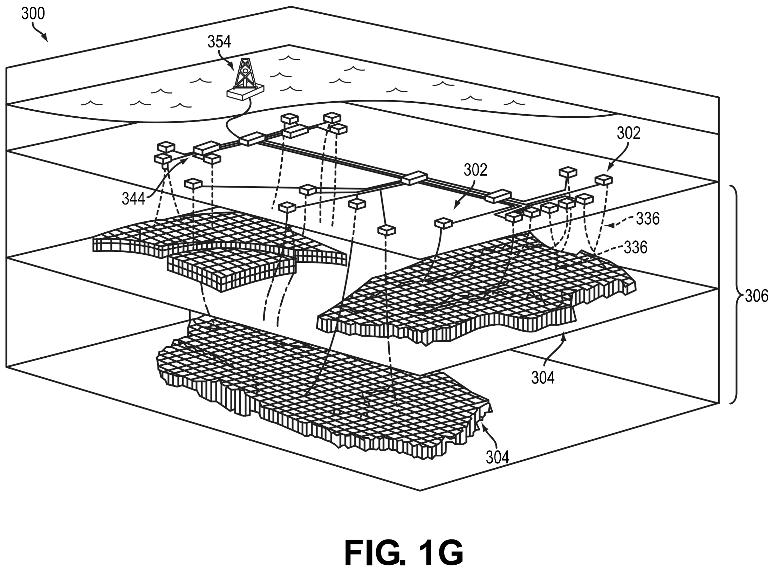

**Figure 1G** illustrates an oilfield 300 for performing production operations in accordance with implementations of various technologies and techniques described herein. As shown, the oilfield has a plurality of wellsites 302 operatively connected to central processing facility 354. The oilfield configuration of **Figure 1G** is not intended to limit the scope of the oilfield application system. Part, or all, of the oilfield may be on land and/or sea. Also, while a single oilfield with a single processing facility and a plurality of wellsites is depicted, any combination of one or more oilfields, one or more processing facilities and one or more wellsites may be present.

Each wellsite 302 has equipment that forms wellbore 336 into the earth. The wellbores extend through subterranean formations 306 including reservoirs 304. These reservoirs 304 contain fluids, such as hydrocarbons. The wellsites draw fluid from the reservoirs and pass them to the processing facilities via surface networks 344. The surface networks 344 have tubing and control mechanisms for controlling the flow of fluids from the wellsite to processing facility 354.

Attention is now directed to methods, techniques, and workflows for planning, forecasting, and/or optimizing production related systems (e.g., model selections, reservoir maps, wells, etc.) in accordance with some embodiments. Some operations in the processing procedures, methods, techniques, and workflows disclosed herein may be combined and/or the order of some operations may be changed. Those with skill in the art will recognize that in the geosciences and/or other multi-dimensional data processing disciplines, various interpretations, sets of assumptions, and/or domain models such as velocity models, may be refined in an iterative fashion; this concept may be applicable to the procedures, methods, techniques, and workflows as discussed herein. This iterative refinement can include use of feedback loops executed on an algorithmic basis, such as at a computing device (e.g., computing system 150, **Figure 1A****),** and/or through manual control by a user who may make determinations regarding whether a given step, action, template, or model has become sufficiently accurate.

### Introduction to Distributed Acoustic Sensing at the Surface

Distributed acoustic sensing deployed horizontally at the surface (S-DAS) may provide a dense seismic sensor array which may be sensitive to vibration. The surface may be a surface between the earth and the atmosphere, between the surface of the earth and a body of water (for example, the seafloor), and the like. Further, "at the surface" may include within 10 meters of the surface. Continuously recording noise at the surface may enable one to generate virtual shots that can be analyzed to provide information on the subsurface. Moreover, S-DAS may have a flat frequency response, thus enabling the recording of very low frequency signals (e.g., 0.01 Hz) with high fidelity. While analysis of the independent virtual shots may be useful and conventionally done, the ability to measure the changes in subsurface response using the virtual shot gathers may be generating a cost-effective monitoring system that can be used to monitor changes in the subsurface. Specifically, within the context of Carbon Capture and Storage (CCS), one can measure the changes in the acoustic properties associated with the changes in fluids due to carbon dioxide (CO2) injection. Thus, the present disclosure may provide an effective way to monitor CO2 plume propagation directly from ambient noise. The methods and systems disclosed herein may be useful in monitoring other subsurface structures, including such man-made structures as pipelines.

### Theory

Ambient noise interferometry of low frequency data using fiber optics in S-DAS configuration may be used to monitor changes in subsurface fluids. Other systems, for example, an Ocean Bottom Node (OBN), may be used to acquire ambient noise. While this disclosure will present systems and methods incorporating S-DAS, it may be understood that other systems may be used. The method may be based on the ability to construct virtual shots from ambient noise (a process known as interferometry). As the ambient noise may be rich in surface waves in land or Scholte waves in marine surface, wave interferometry may generate seismogram rich in surface waves (but also with body waves). Monitoring changes in the interferometric wave patterns over time can be used to detect changes in the subsurface. Low frequency surface/Scholte waves may be sensitive to changes in both P-wave and S-wave subsurface velocity at depth that can be greater than 1 kilometer (km) for sub-Hz data. This sensitivity can be exploited when monitoring subsurface changes by monitoring the changes in the data and its transforms which include velocity spectrum, Radon transformed data, frequency-wavenumber (FK) and other space time representation of wavefield. For the case of Carbon Capture, Utilization, and Storage (CCUS) the combination of ambient noise interferometry and differences in time can be used to detect the movement of CO2 saturation front.

### Example Workflow

By using ambient noise interferometry, the disclosed workflow may enable a reduction in the cost of CCUS monitoring dramatically. The usage of S-DAS may enable sensitivity to low (for example, sub-hertz (sub-Hz)) frequencies which enable deeper penetration for surface waves. For example, S-DAS may enable sensitivity for frequencies below 20 Hz. More particularly, S-DAS may enable sensitivity for frequencies below 2 Hz. In another example, S-DAS may enable sensitivity for frequencies between 0.01 Hz and 20 Hz. The combination of S-DAS and smart designs (for example, adaptive monitoring as presented in U.S. Patent Publication No. 2025/0109685 A1, which is incorporated by reference herein in its entirety) may enable passive monitoring of the subsurface with no active sources, which may reduce the cost of monitoring substantially. Continuous monitoring may enable increasing the frequency of the monitoring without adding cost so continuous monitoring may be more frequent at lower cost. In general, the cost of active source acquisition may scale with the number of shots per survey and the number of surveys. As the method and system of the present disclosure may not need to commission a new survey, the cost reduction may be very high (e.g. greater than 90%). Thus, one can choose to commission an active source survey on demand and then do the active source survey in a manner that is less frequent than without the technology disclosed herein.

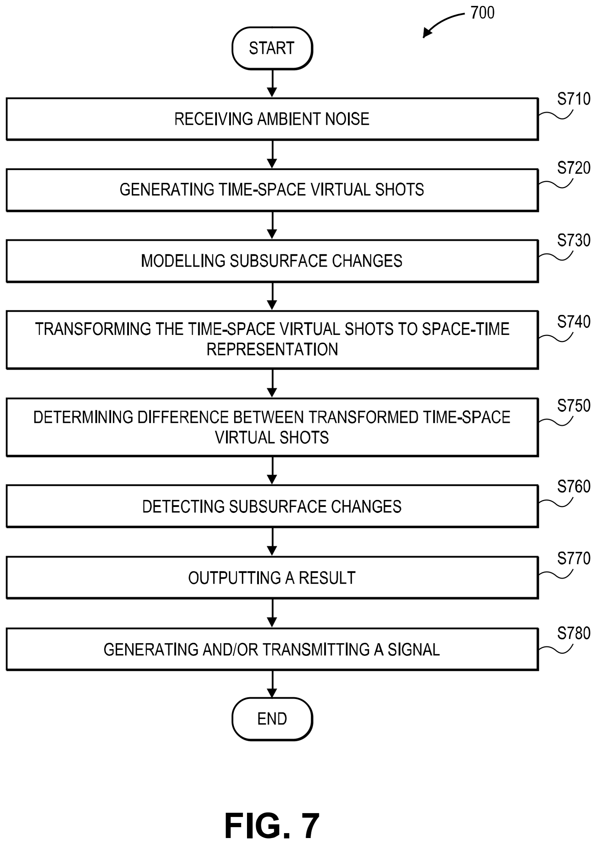

As illustrated in the flowchart of **Figure 7****,** a method 700 for monitoring subsurface changes in a subsurface domain may include one or more of the following steps. The sequence of the steps, the omission of one or more steps, the repetition of one or more steps may be considered in one or more embodiments of the present disclosure. A subsurface domain may include one or more of a carbon capture, utilization, and storage (CCUS) domain, a pipeline integrity domain, and/or a geotechnical domain. Examples of application in the geotechnical domain may include monitoring and/or assessing the integrity of infrastructure such as railways, bridges, and dams.

The method may include receiving S710 ambient noise. In one or more embodiments, the ambient noise may be recorded using an S-DAS system. The S-DAS system may include at least one fiber optic cable on or near a surface. Examples of surfaces may be those found at the boundary between the earth and the atmosphere or at the boundary of the earth and a body of water (for example, a seafloor). In the present context, "near a surface" may refer to being within 10 meters of the surface.

The S-DAS system may further include an S-DAS interrogator subsystem that may include a transmitter operable to transmit pulsed light through the at least one fiber optic cable. In one or more embodiments, the S-DAS system may further include a signal amplifier operable to amplify the pulsed light and/or the backscattered light. Fiber optic cables may extend 100 kilometers (km) or more. Signal amplifiers may be used as signal loss, such as signal loss (or signal-to-noise ratio) related to cable length, increases to a level that is unacceptable for the intended measurement. The S-DAS system may be operable as a swept-frequency S-DAS system (for example, with "chirped" pulses) and/or a pulsed S-DAS system where the pulses are substantially monochromatic.

The S-DAS system may include a receiver operable to receive light backscattered off the at least one fiber optic cable. Additionally, the S-DAS system may include a computing system operable to process the backscattered light received by the receiver. An example of one such computing system is described in reference to **Figure 1A****.**

The S-DAS system may include an active source. Measurements with the active source may complement measurements of the ambient noise.

The method may generate S720 a plurality of time-space virtual shots (VS) by processing the ambient noise. The time-space virtual shots may be generated from ambient noise for a plurality of intervals, for example, for every given interval. Each interval may have a duration of at least multiple days (for example, intervals may range from 2 days to 6 months, although longer and shorter intervals may be selected).

The processing may include removal of noise caused by hardware of the S-DAS interrogator subsystem, band-pass filtering, and/or low-pass filtering based a frequency range targeted by an analysis of the passive noise recordings. The processing may include spectral whitening, and/or spatial whitening aimed at assuring that theoretical interferometry assumptions are met. The theoretical interferometry assumptions may include the ambient noise sources being randomly but uniformly distributed around the at least one fiber optic cable. Also, the processing may include identification and suppression of steady and/or highly directional noise sources, and/or computation of a cross-correlation in time or frequency domain. The processing may include the application of machine learning for a separation part of the processing.

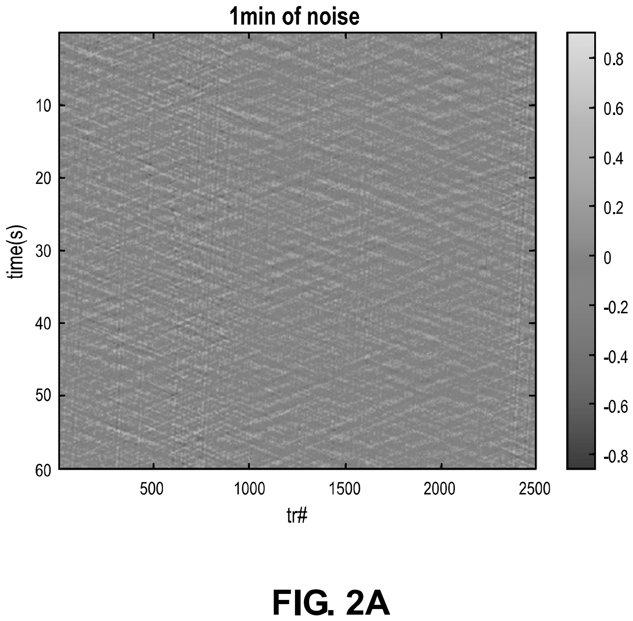

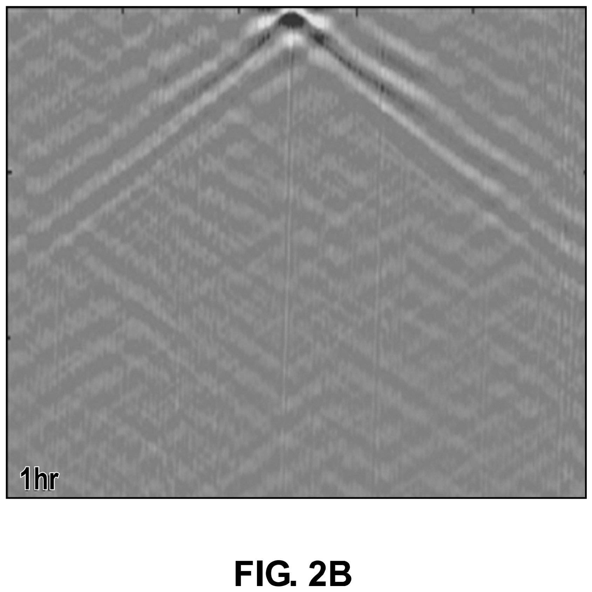

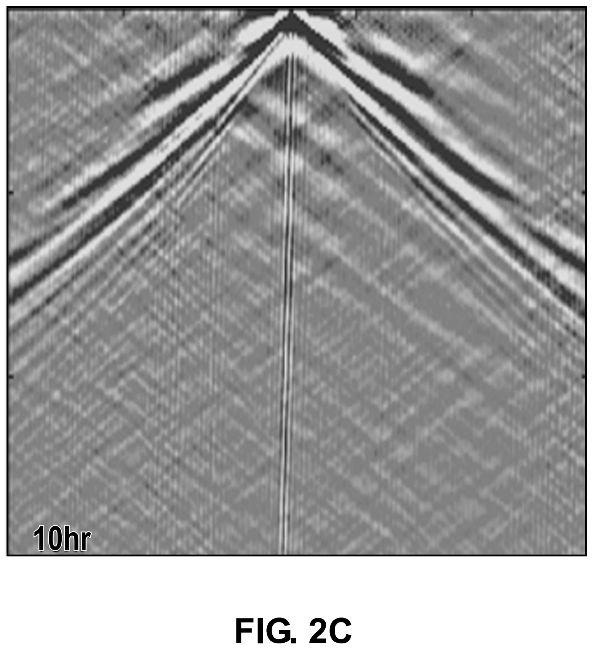

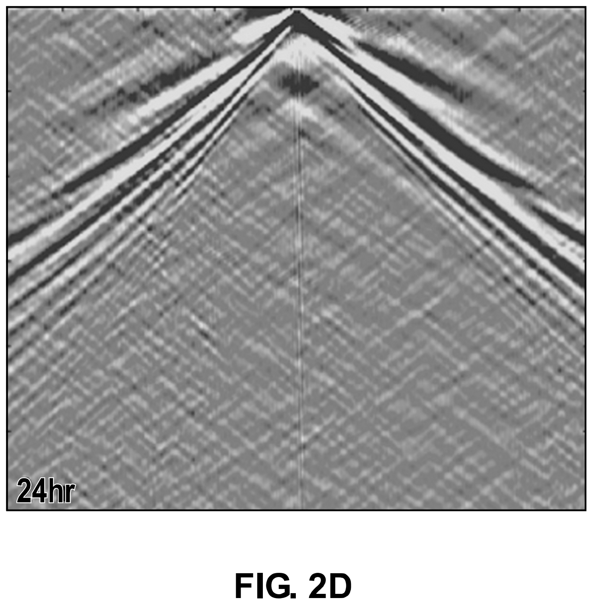

The method may be demonstrated in **Figures 2A-2D****.** In **Figure 2A****,** one minute of ambient noise is displayed in a gray scale (legend on the right showing amplitude in arbitrary units) with trace (tr#) along the horizontal axis and time (in this example, seconds (s)) on the vertical axis. A color scale may be used in place of a gray scale and may improve the visibility of features. The legend of **Figure 2A** may also be applied to **Figures 2B-2D****.** As shown in **Figure 2A****,** acquired ambient noise may be used to construct VS from continuous recording, as shown **Figures 2B-2D. Figures 2B-2D** display VS after 1 hour (hr), 10 hr, and 24 hr, respectively, of ambient noise recording. More generally, the VS may be constructed over any interval as useful and practical.

The method may include modeling S730 subsurface changes based on at least a portion of the plurality time-space virtual shots. The subsurface changes may also be modeled based on a sensitivity to fluid injection and/or to changing mechanical properties associated with changes in pressure and/or stress into the subsurface domain. The subsurface changes may be modeled using full wave modeling and surface/Scholte wave dispersion modeling for low frequencies, for example, frequencies at or below 20 Hz. Subsurface changes may include variations of the type of fluid saturating a certain portion of the subsurface, variations of the pore pressure, changes in fluids and saturation, and/or changes in the mechanical and elastic properties of the subsurface, which may indicate failure or change in stress regime.

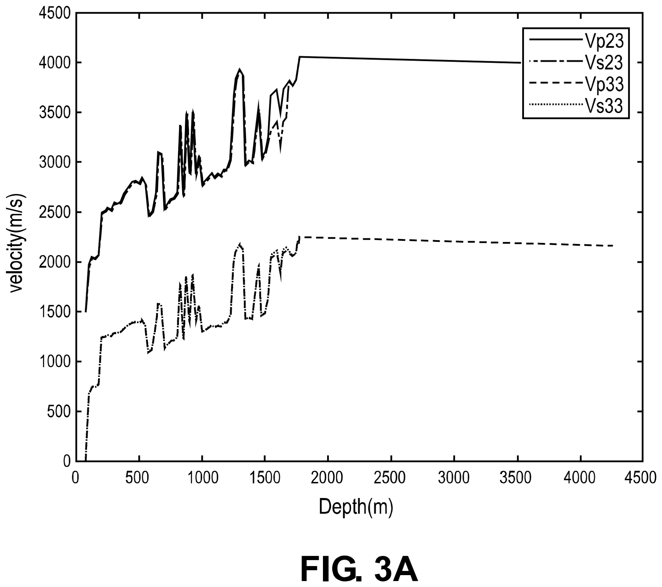

**Figure 3A** illustrates synthetic modeling of subsurface changes in wave velocity (in meters/second (m/s)) as a function of depth in meters (m) due to CO2 injection over a ten-year period. In this example, the starting year is taken to be 2023 and the ending year is taken to be 2033. P-wave (or compressional wave) velocity (Vp) for the start date and end date are shown as the upper pair of curves, represented by Vp23 and Vp33, respectively. The lower pair of curves, Vs23 and Vs33, represent S-wave (or secondary wave or shear wave) velocities and the start date and end date, respectively. An S-wave may also be referred to as a body wave.

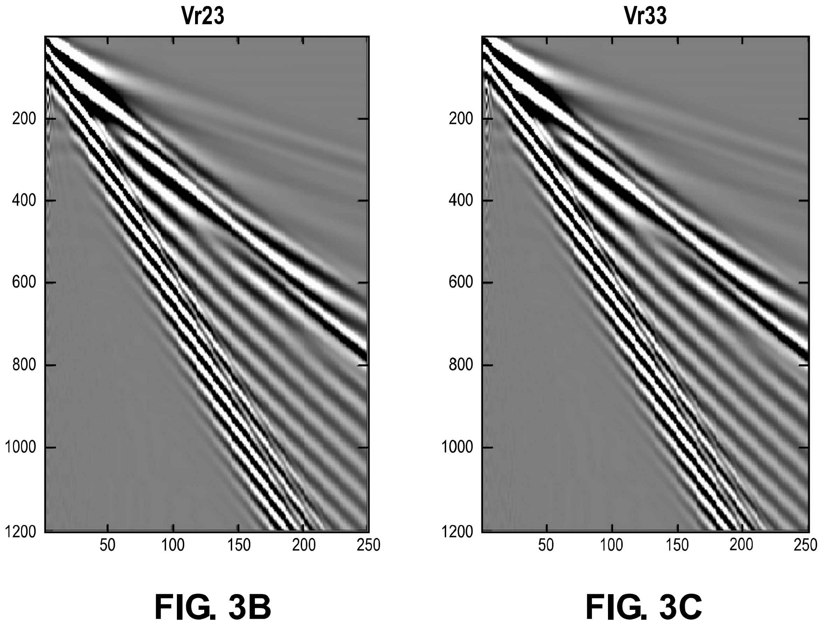

**Figures 3B and 3C** illustrate full waveform elastic modeling of VS for Rayleigh wave velocities (Vr23 and Vr33, respectively). These two figures display Rayleigh waves as a function of offset in meters on the horizontal axis and time in microseconds on the vertical axis.

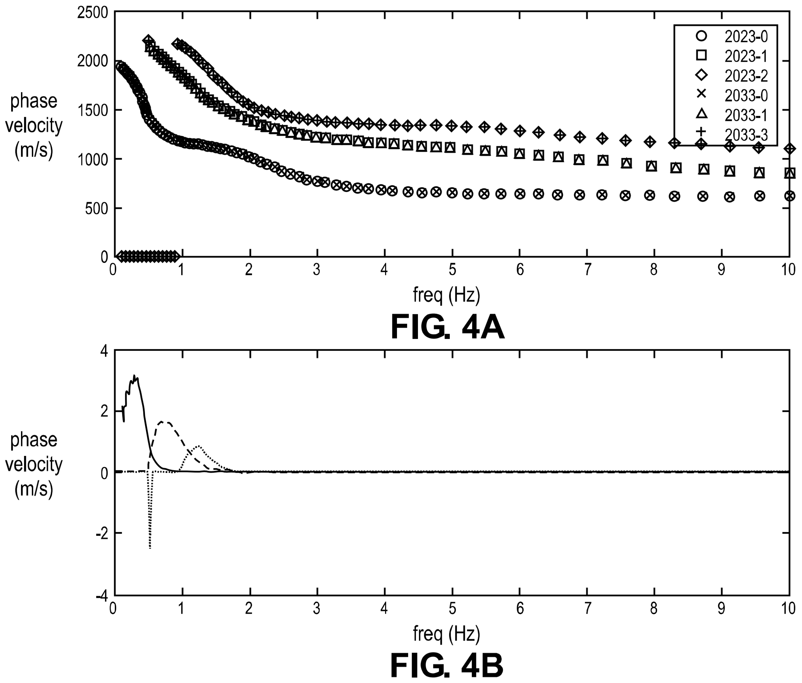

The method may include modeling sensitivity of a theoretical response that may show where differences may be expected to appear. **Figure 4A** presents dispersion curves of phase velocity (m/s) as a function of frequency (Hz) for three dispersion modes each for both 2023 and 2033. A circle represents 2023 data, and an × represents 2033 data. Each dispersion mode may represent a different sensitivity to subsurface change **Figure 4B** represents the difference between the 2023 data and the 2033 data for the three dispersion modes. Changes in the dispersion curve due to changes in the elastic properties, namely, Vp and Vs as shown in **Figures 3A-3C****.** The presentations of **Figures 4A** and **4B** may also be described as velocity spectra (that is, phase velocity vs. frequency). A velocity spectrum is a special case of the Radon transform.

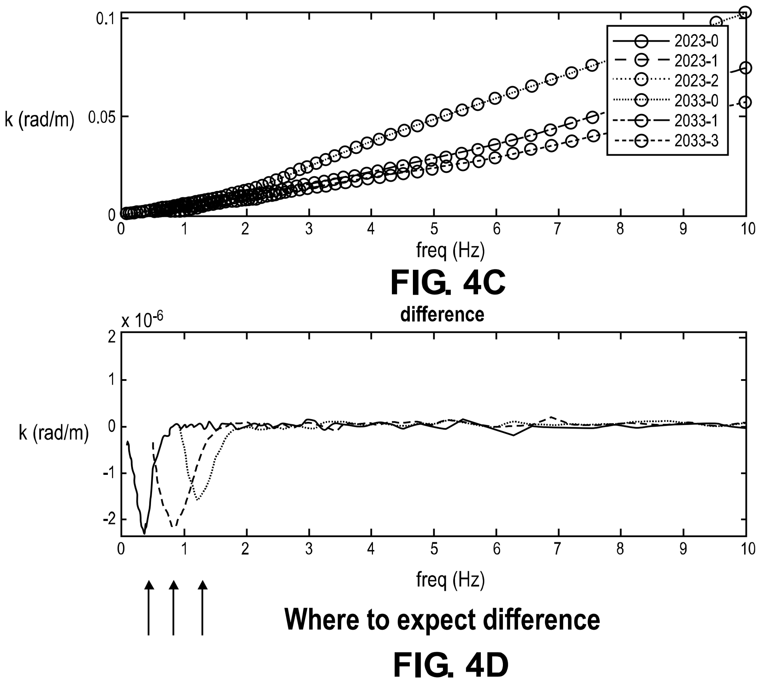

**Figure 4C** shows the data of **Figure 4A** after undergoing an FK transform, with the data now being displayed in spatial frequency k with units of radians/meter (rad/m). **Figure 4D** presents the difference between the 2023 data and the 2033 data expressed in the conjugate space of spatial frequency. The differences are most prominent at low frequencies, in this example, below 2 Hz.

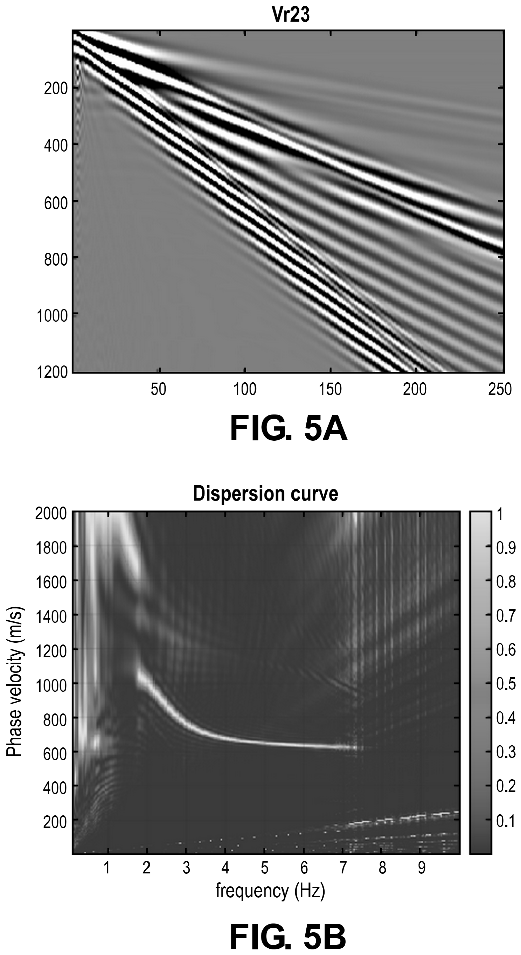

The method may include transforming S740 the time-space virtual shots to a space-time representation (for example, velocity spectra, FK, or Radon transform) as presented in **Figures 5A-5D****,** which present numerical dispersion derived from the synthetic data previously generated. A space time representation may include a velocity spectra, an FK, a Radon, or similar transform. Thus, the transforming may include mapping the time-space virtual shots in a time-space domain into a frequency-wavenumber domain

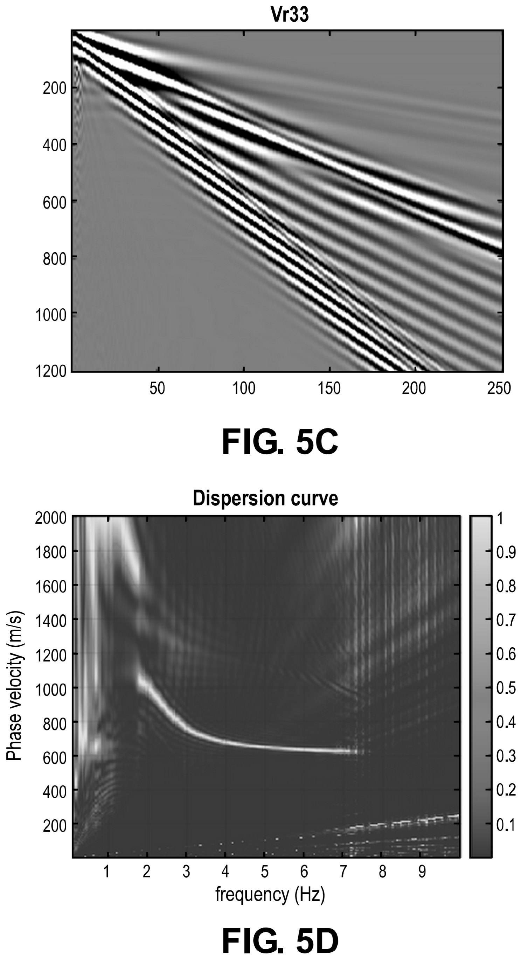

**Figures 5A** and **5B** present data from before the injection (2023 model in our example). **Figures 5C** and **5D** present data from 10 years after the injection of CO2 (2033 model in our example).

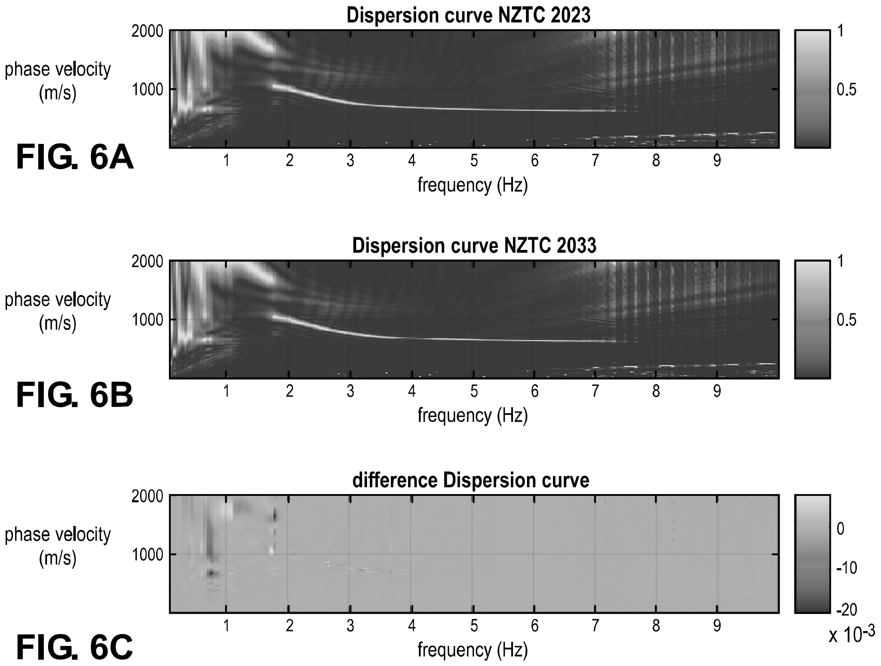

The method may include determining S750 at least one difference between the transformed time-space virtual shots. This determining may also be referred to as differencing the time-space transformed data. The at least one difference may include a comparison between the transformed time-space virtual shots at an end time of one of the intervals and the transformed time-space virtual shots at a start time of the same interval. In an embodiment, the at least one difference may include arithmetic subtraction, adaptive subtraction, applying machine learning to detect small differences without using subtraction, and the like. **Figures 6A** and **6B** present dispersion curves from **Figures 5B** and **5D****.** **Figure 6C** presents the difference between these two dispersion curves. One again notes that the differences below 2 Hz are readily identifiable in **Figure 6C****.** Thus, the present disclosure may allow detection of subsurface changes in fluid content due to anomalies in a low-frequency range, say, below 2 Hz.

The method may also include detecting S760 the subsurface changes based on the at least one difference.

The method may further include outputting S770 a result based on the subsurface changes. The result may include a map of CCS extent, changes in pore pressure, changes in mechanical and/or elastic properties in the subsurface, and the like. Outputting may include displaying the result in one or more of a graphic, textual, and/or audible form.

The method may also include performing S780 an action based upon and/or in response to the result. The action may be or include generating and/or transmitting a signal that recommends, instructs, or causes a physical action to occur. The action may also or instead include performing the physical action. The physical action may include triggering an active source campaign with an intention to better identify and map a subsurface portion that may be generating the subsurface change in the virtual shots. Identifying and mapping may include defining the location of the variation in the subsurface in terms of position and extension. Additionally or alternatively, the physical may include stopping or reducing a fluid injection rate based on the subsurface change exceeding a threshold. The threshold may be fixed or variable, predetermined or not, according to the needs of the concerned party or parties.

The foregoing description, for purpose of explanation, has been described with reference to specific embodiments. However, the illustrative discussions above are not intended to be exhaustive or limiting to the precise forms disclosed. Many modifications and variations are possible in view of the above teachings. The embodiments were chosen and described in order to explain the principles of the disclosure and its practical applications, to thereby enable others skilled in the art to utilize the disclosed embodiments and various embodiments with various modifications as are suited to the particular use contemplated.

## Claims

1. A method for monitoring changes in a subsurface in a subsurface domain, the method comprising:
receiving ambient noise occurring in the subsurface domain;
generating a plurality of time-space virtual shots by processing the ambient noise;
modeling the subsurface based on at least a portion of the plurality of time-space virtual shots;
transforming the plurality of time-space virtual shots to a space-time representation, wherein the transforming preferably comprises mapping the time-space virtual shots in a time-space domain into a frequency-wavenumber domain;
determining at least one difference between the transformed time-space virtual shots; and
detecting changes in the subsurface based on the at least one difference.

2. The method of claim 1, wherein:
the ambient noise is recorded using an S-DAS system, the S-DAS system comprising:
at least one fiber optic cable on or near a surface, wherein near the surface comprises within 10 meters of the surface;
an S-DAS interrogator subsystem comprising a transmitter operable to transmit pulsed light through the at least one fiber optic cable;
a receiver operable to receive light backscattered off the at least one fiber optic cable; and
a computing system operable to process the backscattered light received by the receiver,
wherein the S-DAS system further comprises a signal amplifier operable to amplify the pulsed light and/or the backscattered light,
wherein the S-DAS system is operable as a swept-frequency S-DAS system and/or a pulsed S-DAS system, and/or
wherein the S-DAS system further comprises an active source, and
wherein measurements with the active source complement measurements of the ambient noise.

3. The method of claim 1 or 2, wherein the plurality of time-space virtual shots are generated for a plurality of intervals, and
wherein each of the intervals has a duration of at least a plurality of days.

4. The method of claim 2 or 3, wherein the processing comprises at least one of:
removal of noise caused by hardware of the S-DAS interrogator subsystem, band-pass filtering, and/or low-pass filtering based a frequency range targeted by an analysis of passive noise recordings,
spectral whitening, and/or spatial whitening aimed at assuring that theoretical interferometry assumptions are met, wherein the theoretical interferometry assumptions include ambient noise sources being randomly but uniformly distributed around the at least one fiber optic cable,
identification and suppression of steady and/or highly directional noise sources, and/or
computation of a cross-correlation in time or frequency domain.

5. The method of any one of the preceding claims, wherein:
the changes in the subsurface are also modeled based on a sensitivity to fluid injection and/or to changing mechanical properties associated with changes in pressure and/or stress into the subsurface domain, and/or
the changes in the subsurface are modeled using full wave modeling and surface/Scholte wave dispersion modeling for frequencies at or below 20 Hz,
wherein the changes in the subsurface comprise one or more of variations of a type of fluid saturating a certain portion of the subsurface, variations of a pore pressure, changes in fluids and saturation, and/or changes in mechanical and/or elastic properties of the subsurface.

6. The method of any one of the preceding claims, wherein the at least one difference comprises a comparison between the transformed time-space virtual shots at an end time of an interval and the transformed time-space virtual shots at a start time of the interval.

7. The method of any one of the preceding claims, further comprising at least one of:
outputting a result based on the changes in the subsurface; and/or
generating and/or transmitting a signal that recommends, instructs, or causes a physical action to occur.

8. The method of claim 7, wherein:
the result comprises one or more of a map of CCS extent, changes in pore pressure, and/or changes in mechanical and/or elastic properties in the subsurface, and
the outputting comprises displaying the result in one or more of a graphic, textual, and/or audible form.

9. The method of claim 7 or 8, wherein the physical action includes at least one of:
triggering an active source campaign with an objective of localizing and mapping more accurately a subsurface portion that is generating the changes in the subsurface in the virtual shots; and/or
stopping or reducing a fluid injection rate based on the changes in the subsurface exceeding a threshold.

10. A computing system, comprising:
one or more processors; and
a memory system comprising one or more non-transitory computer-readable media storing instructions that, when executed by at least one of the one or more processors, cause the computing system to perform operations, the operations comprising:
receiving ambient noise;
generating a plurality of time-space virtual shots by processing the ambient noise;
modeling a subsurface based on at least a portion of the plurality time-space virtual shots;
transforming the plurality of time-space virtual shots to a space-time representation;
determining at least one difference between the transformed time-space virtual shots; and
detecting changes in the subsurface based on the at least one difference.

11. The computing system of claim 10, wherein:
the ambient noise is recorded using an S-DAS system, the S-DAS system comprising:
at least one fiber optic cable on or near a surface, wherein near the surface comprises within 10 meters of the surface, and wherein the at least one fiber optic cable extends primarily in a horizontal direction;
an S-DAS interrogator subsystem comprising a transmitter operable to transmit pulsed light through the at least one fiber optic cable;
a receiver operable to receive light backscattered off the at least one fiber optic cable; and
a computing system operable to process the backscattered light received by the receiver,
wherein preferably:
the S-DAS system further comprises a signal amplifier operable to amplify the pulsed light and/or the backscattered light, and
the S-DAS system is operable as a swept-frequency S-DAS system and/or a pulsed S-DAS system.

12. The computing system of claim 10 or 11, wherein the processing comprises at least one of:
removal of noise caused by hardware of the S-DAS interrogator subsystem, band-pass filtering, and/or low-pass filtering based a frequency range targeted by an analysis of passive noise recordings;
spectral whitening, and/or spatial whitening aimed at assuring that theoretical interferometry assumptions are met, wherein the theoretical interferometry assumptions include ambient noise sources being randomly but uniformly distributed around the at least one fiber optic cable;
identification and suppression of steady and/or highly directional noise sources; and/or
computation of a cross-correlation in time or frequency domain.

13. The computing system of any one of the claims 10 - 12, wherein:
the changes in the subsurface are also modeled based on a sensitivity to fluid injection and/or to changing mechanical properties associated with changes in pressure and/or stress into a subsurface domain, and/or
the changes in the subsurface are modeled using full wave modeling and surface/Scholte wave dispersion modeling for frequencies at or below 20 Hz,
wherein the changes in the subsurface comprise one or more of variations of a type of fluid saturating a certain portion of the subsurface, variations of a pore pressure, changes in fluids and saturation, and/or changes in mechanical and/or elastic properties of the subsurface.

14. A non-transitory computer-readable medium storing instructions that, when executed by one or more processors of a computing system, cause the computing system to perform operations, the operations comprising:
receiving ambient noise;
generating a plurality of time-space virtual shots by processing the ambient noise;
modeling a subsurface based on at least a portion of the plurality time-space virtual shots;
transforming the plurality of time-space virtual shots to a space-time representation;
determining at least one difference between the transformed time-space virtual shots; and
detecting changes in the subsurface based on the at least one difference.

15. The non-transitory computer-readable medium of claim 14, wherein the operations further comprise at least one of:
outputting a result based on the subsurface changes; and/or
generating and/or transmitting a signal that recommends, instructs, or causes a physical action to occur,
wherein:
the ambient noise is recorded using an S-DAS system, the S-DAS system comprising:
at least one fiber optic cable on or near a surface, wherein near the surface comprises within 10 meters of the surface;
an S-DAS interrogator subsystem comprising a transmitter operable to transmit pulsed light through the at least one fiber optic cable;
a receiver operable to receive light backscattered off the at least one fiber optic cable;
a computing system operable to process the backscattered light received by the receiver;
a signal amplifier operable to amplify the pulsed light and/or the backscattered light; and
an active source, wherein measurements with the active source complement measurements of the ambient noise,
the S-DAS system is operable as a swept-frequency S-DAS system and/or a pulsed S-DAS system,
the plurality of time-space virtual shots are generated for a plurality of intervals,
each of the intervals has a duration of at least a plurality of days,
the processing comprises at least one of:
removal of noise caused by hardware of the S-DAS interrogator subsystem, band-pass filtering, and/or low-pass filtering based a frequency range targeted by an analysis of passive noise recordings;
spectral whitening, and/or spatial whitening aimed at assuring that theoretical interferometry assumptions are met, wherein the theoretical interferometry assumptions include ambient noise sources being randomly but uniformly distributed around the at least one fiber optic cable;
identification and suppression of steady and/or highly directional noise sources; and/or
computation of a cross-correlation in time or frequency domain,
the subsurface changes are also modeled based on a sensitivity to fluid injection and/or to changing mechanical properties associated with changes in pressure and/or stress into a subsurface domain, and/or
the subsurface changes are modeled using full wave modeling and surface/Scholte wave dispersion modeling for frequencies at or below 20 Hz,
the changes in the subsurface comprise one or more of variations of a type of fluid saturating a certain portion of the subsurface, variations of a pore pressure, changes in fluids and saturation, and/or changes in mechanical and/or elastic properties of the subsurface,
the at least one difference comprises a comparison between the transformed time-space virtual shots at an end time of one of the intervals and the transformed time-space virtual shots at a start time of the same interval,
the transforming comprises mapping the time-space virtual shots in a time-space domain into a frequency-wavenumber domain,
the result comprises one or more of a map of CCS extent, changes in pore pressure, and/or changes in mechanical and/or elastic properties in the subsurface,
the outputting comprises displaying the result in one or more of a graphic, textual, and/or audible form, and
the physical action includes at least one of:
triggering an active source campaign with an objective of localizing and mapping more accurately a subsurface portion that is generating subsurface change in the virtual shots; and/or
stopping or reducing a fluid injection rate based on the subsurface change exceeding a threshold.
